# EUROPÄISCHE PATENTSCHRIFT

(11) **EP 1 105 543 B1**
(45) Veröffentlichungstag und Bekanntmachung des Hinweises auf die Patenterteilung: **13.03.2002**
(21) Anmeldenummer: 99932809.9
(22) Anmeldetag: 03.07.1999
(51) Int. Cl.: C21D 9/30

(54) **VERFAHREN ZUM HERSTELLEN EINES AUF EINE HOHLWELLE UNTER BILDUNG EINER NOCKENWELLE ZU FÜGENDEN NOCKENS**
METHOD FOR PRODUCING A CAM THAT CAN BE PLACED ON A HOLLOW SHAFT TO FORM A CAMSHAFT
PROCEDE DE FABRICATION D'UNE CAME DESTINEE A ETRE PLACEE SUR UN ARBRE CREUX POUR LA FORMATION D'UN ARBRE A CAMES

(30) Priorität: 11.08.1998 DE 19836247
(43) Veröffentlichungstag der Anmeldung: 13.06.2001
(73) Patentinhaber: DaimlerChrysler AG, 70567 Stuttgart (DE)
(72) Erfinder: BARTH, Andreas, D-70771 Leinfelden (DE); BLÖCKER, Henning, D-21435 Stelle (DE); BRANDES, Klaus, D-21271 Asendorf (DE); ROHWER, Frank, D-24783 Osterrönfeld (DE)
(86) Internationale Anmeldenummer: EP9904641
(87) Internationale Veröffentlichungsnummer: WO0009769

(56) Entgegenhaltungen:
- EP-A- 0 265 663
- DE-A- 3 738 809
- DE-A- 4 420 092
- DE-C- 19 716 554

## Beschreibung

Die Erfindung betrifft ein Verfahren zum Herstellen eines auf eine Hohlwelle unter Bildung einer Nockenwelle zu fügenden Nockens gemäß dem Oberbegriff des Patentanspruches 1.

Gewichtsoptimierte Nockenwellen sind durch form- und kraft-schlüssiges Fügen von Nocken auf einem Rohr kostengünstig herzustellen. Hinsichtlich der Funktionssicherheit müssen die Nocken sowohl eine hohe Haftfestigkeit auf dem Rohr zur Betriebssicherheit bei der Aufnahme auch von hohen Motordrehmomenten als auch eine gehärtete Laufbahn aufweisen, wobei letztere nach dem Fügen der Nocken aus Gründen der Verschleißfestigkeit ausreichende Druckeigenspannungen besitzen soll. Dies gilt insbesondere bei Ventilsteuerungen mit Rollenkipphebeln für die Nockenflanke und eingeschränkt auch für die Nockenspitze. Bei fehlenden Druck- bzw. vorhandenen Zugeigenspannungen in der Nockenlaufbahn kommt es im Motorbetrieb durch Wälzvorgänge zu zusätzlichen Zugspannungen, die zu einer Werkstoffüberlastung in der Laufbahn führen, so daß diese ermüdet bzw. zerrüttet.

Ein gattungsgemäßes Verfahren ist aus der DE 44 20 092 C2 bekannt.

Der Erfindung liegt die Aufgabe zugrunde, ein gattungsgemäßes Verfahren dahingehend weiterzubilden, daß der Nocken eine langzeitstabile Betriebstauglichkeit auf der Nockenwelle aufweist, wobei vor dem Fügen des Nockens auf der Nockenwelle derart hohe Druckeigenspannungen in der Nockenlaufbahn erzielt werden, daß die aus dem Fügen resultierenden Zugspannungen dauerhaft überkompensiert werden.

Die Aufgabe ist erfindungsgemäß durch die Merkmale des Patentanspruches 1 gelöst.

Dank der Erfindung wird durch das Zusammenwirken mehrerer Kriterien eine reproduzierbare Herstellung eines Nocken mit optimalen Funktionseigenschaften in Hinblick auf eine sichere Halterung des Nockens auf der Hohlwelle nach dem Fügen unter Betriebslast und auf eine ausreichende Eigenstabilität bezüglich den auf ihn im Motorbetrieb wirkenden mechanischen Belastungen erreicht. Die Wahl des Nockenwerkstoffes mit einer sehr hohen Streckgrenze von mindestens 450 N/mm² ist hierbei ganz entscheidend für die Erreichung der genannten Eigenschaften, die durch die Temperaturbehandlung des Nockenrohlings zu Tage treten. Darunter fallen zum Beispiel die härtbaren Stähle 100 Cr 6, Ck 67, C 60, C 70 etc.. Zum Erreichen der erforderlichen Mindeststreckgrenze sind diese Stähle vor dem Randschichthärten zu vergüten, können aber auch im warmgepreßten Zustand verwendet werden (BY-Zustand). Durch den erfindungsgemäß beanspruchten Werkstoff wird ein hochfestes Gefüge erzielt, das beim späteren Fügen des fertigbehandelten Nockens aufgrund der großen Streckgrenzendifferenz zum Rohr, welches beispielsweise aus dem Werkstoff St 37, St 52 oder ähnlichem besteht, zu hohen Nockenhaftfestigkeiten durch das elastische Zurückfedern des Nocken zum infolge Innenhochdruckes plastisch aufgeweiteten Rohr führt. Im Falle einer Vergütung muß zusätzlich zur geeigneten Wahl des Stahlwerkstoffes der Stahl so angelassen werden, daß sich eine Basishärte im Bereich zwischen 25 und 40 HRC einstellt, da unterhalb von 25 HRC ein unerwünschtes plastisches Aufweiten des Nockens beim Fügen auftreten würde und überhalb von 40 HRC sich Spannungsrisse in der Nockenlaufbahn beim späteren Randschichthärten oder Fügen ergeben würden. Anschließend wird der Nocken in einem zweistufigen Erwärmungsverfahren durch Induktionshärten mittels eines Ring- oder Forminduktors mittelfrequent im Bereich von 10-35 kHz sanft randschichtgehärtet. Sanft Randschichthärten heißt, daß der Nocken in der ersten Stufe des Erwärmungsverfahrens bis zu 1,5 sec bei einer Leistung von etwa 40 kW vorgewärmt wird, wonach die Wärmeeinbringung für eine Dauer von 0,3-1,5 Sekunden unterbrochen wird. Durch diese Pause werden Überhitzungseffekte im Gefüge, insbesondere im Laufbahnbereich, sowie zu hohe Randschichthärtetiefen, die sich ansonsten nach einer unmittelbar an das Vorwärmen sich anschließenden zweiten Erwärmungsstufe ergeben würden, vermieden und ein sehr sanfter kontinuierlicher Härteabfall von der Randschicht zum nockenbohrungsnahen nicht-randschichtgehärteten Kern hin erreicht. Ein derartiger Härteabfall ist wesentlich, da sonst die Randschicht rißempfindlich wäre. Beispielsweise ist die Härte im Bereich der Laufbahn 60 HRC und nimmt zu 30 HRC im Kernbereich ab. Des weiteren wird die bei einer unmittelbar sich anschließenden Weitererwärmung, also einer sich direkt an das Vorwärmen fortsetzenden zweiten Erwärmungsstufe, ergebende Ausbildung eines groben Martensitgefüges mit weichem Restaustenit vermieden, was zu niedrigen Druckeigenspannungen im Gefüge führt.

Im Anschluß an die Einwirkung der Vorwärme wird die Nockenlaufbahn mittels Mittelfrequenz eine weiteres Mal bei gegenüber dem Vorwärmen gesteigerter Leistung erhitzt (zweite Erwärmungsstufe), wobei eine Temperatur erhalten wird, die über der Austenitisierungstemperatur liegt. Das Kerngefüge wird dabei nicht beeinflußt. Aufgrund der zweiten Erwärmungsstufe in Verbindung mit den beschriebenen vorteilbringenden Effekten der vorangegangenen Pause zwischen den beiden Erwärmungsstufen des Erwärmungsverfahrens kann nun eine Randschichthärtetiefe in der Laufbahnmitte zwischen minimal 0,5 mm und maximal 2,0 mm bezüglich des Nockengrundkreises und der Nockenflanken bzw. maximal 2,2 mm bezüglich der Nockenspitze eingestellt werden. Hierbei ist zu sagen, daß die Angabe von 0,5 mm in der Laufbahnmitte einen Nocken betrifft, bei dem man kein Schleifaufmaß vorhalten muß. Nach der Einstellung der Randschichthärtetiefe und Beendigung des Erwärmungsverfahrens wird der Nocken sofort anschließend (im msec-Bereich) mit einer wäßrigen Abschreckmittel abgebraust, wodurch das austenitische Gefüge des Nockens sich in Martensit gänzlich umwandelt. Bei dieser Umwandlung entstehen im Gefüge sehr hohe Druckeigenspannungen. Die Bildung anderer Gefügearten, die nur geringe Druckeigenspannungen erbringen, wird aufgrund der raschen Abschrekkung auf eine Temperatur unterhalb der Martensitbildungstemperatur vermieden. Des weiteren wird durch die Einstellung einer verhältnismäßig dünnen Randschicht beim Abschrecken vermieden, daß aufgrund einer zu großen Dicke der Randschicht eine zeitlich versetzte Umwandlung der außen liegenden Zonen der Randschicht gegenüber den dem Kern näher liegenden Zonen auftritt. Aus dieser zeitlich versetzten Umwandlung einzelner Randschichtzonen würde resultieren, daß die am spätesten umgewandelte Kernzone statt Drukkeigenspannungen Zugspannungen in der Nockenlaufbahn erzeugt. Somit wird erfindungsgemäß durch die Einstellung einer geringen Randschichthärtetiefe und die sofortige Abschreckung des Nockens, die im übrigen auch mittels Öl oder mittels einem kalten Medium, wie flüssigem Stickstoff erfolgen kann, eine fast gleichzeitige Umwandlung des Nockengefüges in allen Zonen der Randschicht erreicht. Die dabei erfolgende gänzliche Umwandlung in ein martensitisches Gefüge erzeugt aufgrund der umwandlungsbedingten Volumenausdehnungen in der dünnen Randschicht im Nocken sehr hohe Druckeigenspannungen, die bei weitem die aus dem späteren Fügen resultierenden Zugspannungen überkompensieren. Zusätzlich werden Druckeigenspannungen an der Laufbahnoberfläche aus Schrumpfvorgängen des Nockens beim Abbrausen erzeugt.

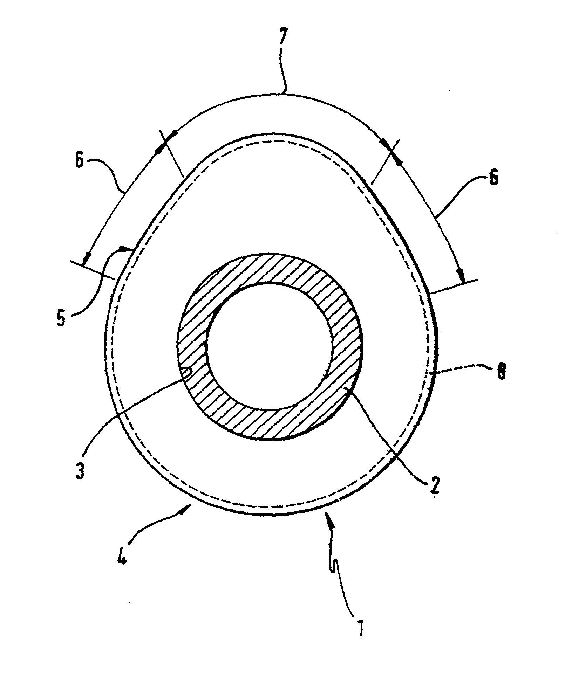

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt die Figur in einem Querschnitt einen erfindungsgemäß hergestellten Nocken in Fügeverbund mit einer Hohlwelle.

In der Figur ist ein Nocken 1 dargestellt, der auf eine Hohlwelle 2 gefügt ist. Der aus dem Werkstoff 100 Cr 6 V HI oder C 70 BY HI etc. bestehende Nocken 1 wird aufgrund des kostengünstigen schnellen Prozesses durch Warmpressen hergestellt. Er kann aber auch aus dem Vollem durch mechanische Zerspanung, insbesondere durch Fräsen gebildet werden. Außerdem ist ein Nocken auch in Guß darstellbar. Der Nocken 1 wird nach dem Warmpressen kontrolliert aus der Umformhitze zur Erreichung eines BY-Zustandes abgekühlt, oder aber nach dem Warmpressen vergütet. Beim warmgepreßten Nocken 1 können bedarfsweise Materialüberlappungen mechanisch entfernt werden, um beim anschließenden Durchhärten Härterisse zu vermeiden. Nach der erfindungsgemäßen Durchhärtung und Randschichthärtung, deren zugrunde liegendes 2-stufiges Erwärmungsverfahren mittels Forminduktor oder Ringinduktor erfolgt, wobei die Nockenspitze vor der Gefahr einer Überhitzung geeignet abgeschirmt werden muß, wird der Nocken 1 induktiv oder in einem Durchlaufofen bei einer Temperatur unter 190°C thermisch entspannt. Dies kann auch induktiv zweistufig bei einer Frequenz im Bereich von 20-40 kHz bei einer Leistung von etwa 5 kW erfolgen. Die erste und die zweite Stufe liegen im Zeitbereich von 1-3 Sekunden, wobei die beiden Stufen durch eine Pause 2-6 Sekunden voneinander getrennt sind.

Dadurch werden Risse beim anschließenden Fügen des Nockens 1 und beim abschließenden Schleifen der Nockenlaufbahn 5 verhindert. Beim thermischen Entspannen werden Druckeigenspannungen im Martensitgefüge teilweise abgebaut ohne das Gefüge selbst umzuwandeln, wodurch ein zäheres Martensitgefüge erreicht wird. Dies gewährleistet auch die Reißfestigkeit beim späteren Fügen. Ein Teil der Druckeigenspannungen wird jedoch beim Entspannen ebenfalls abgebaut; es sollte daher beim Vorgang des Entspannens durch optimierte Führung der Steuerungsparameter (z.B. Anlassen unter 190°C etc.) darauf geachtet werden, daß einerseits die durch das Randschichthärten gewonnenen Druckeigenspannungen nicht zu stark reduziert werden und andererseits auch die Härte in der Randschicht 8 nicht allzusehr, möglichst nicht unter 58 HRC abfällt.

Nach dem Entspannen des randschichtgehärteten Nockens 1 wird dieser so gefügt, daß im Grundkreis 4 hohe Fügespannungen wirken. Die Fügetechniken sind variabel, jedoch ist, um einen betriebsicheren Fügeverbund zu erhalten, der Einsatz der Innenhochdruckumformtechnik zu bevorzugen. Hierbei wird nämlich ohne Wärmeentwicklung hervorzurufen die Hohlwelle 2 plastisch aufgeweitet, wobei der Nocken 1 sich elastisch verformt und nach Entspannen des Fluidhochdruckes auf die Hohlwelle 2 zurückfedert und auf dieser einen extrem haltbaren verdrehsicheren Sitz ausbildet.

Wie oben erwähnt, wird die Nockenlaufbahn 5 so randschichtgehärtet, daß sich die höchstmöglichen Druckeigenspannungen aufbauen. Hierfür darf im Grundkreis 4 und in der Nockenflanke 6 die Randschichthärtetiefe maximal 2,0 mm betragen und an der Nockenspitze 7 2,2 mm und zwar in der Laufbahnmitte. Damit die Randschicht beim Abwälzen der Rolle auf dem Rollenkipphebel den Nocken 1 nicht durchbricht, ist nach dem Fertigschleifen der Laufbahn 5 noch eine Randschichthärtetiefe von mindestens 0,5 mm erforderlich. Mit der so gewählten Randschichthärtetiefe bleiben im Grundkreis 4 selbst bei Fügespannungen von bis zu 250 N/mm² hohe Druckeigenspannungen erhalten. Die Fügespannungen werden röntgenografisch in der Nockenlaufbahn 5 ermittelt. In der beim Fügen nicht beeinflußten Nockenspitze 7 und in der Nockenflanke 6, wo kaum Fügespannungen wirken, sind Druckeigenspannungen von mindestens 200 N/mm² nach dem Fügen vorhanden. Bei konkav ausgebildeten Nockenflanken 6 sind Druckeigenspannungen von sogar 300 N/mm² nach dem Fügen erreichbar. Die hier angegebenen Kennwerte gelten für Nocken 1, die nach dem Randschichthärten bei 180°C entspannt werden und bei denen das Schleifaufmaß der Nockenlaufbahn 5 bis zu 0,7 mm beträgt. Bei niedrigeren Anlaßtemperaturen oder geringeren Schleifaufmaßen sind in aller Regel höhere Druckeigenspannungen und somit höhere zulässige Fügespannungen im Grundkreis 4 zu erzielen. Mit der vom Wert her nach oben eingegrenzten Randschichthärtetiefe sind Nocken druckeigenspannungsoptimiert randschichthärtbar, die nur eine Gurthöhe von nur 4,0 mm aufweisen.

Zusätzlich zu der Möglichkeit, durch maximal zulässige Fügespannungen aus der erfindungsgemäßen Erzielung von hohen Druckeigenspannungen im Nocken 1 hohe Nockenhaftfestigkeit auf der Hohlwelle 2 zu erhalten, kann vor dem Fügevorgang die Nockenbohrung 3 beispielsweise mit Edelkorund gestrahlt werden, was die Haftfestigkeit des Nockens 1 auf der Hohlwelle 2 deutlich erhöht. Bei konstant gehaltenen Fügeparamtern und Nockengeometrien werden nach einem solchen Strahlen doppel so hohe Haftfestigkeiten erzielt. Unter Ausnutzung der maximal möglichen Fügespannung von 250 N/mm² bzw. des Aufweitdruckes beim Innenhochdruckverfahren, bei der die Druckeigenspannungen im Grundkreis 4 des Nockens 1 nicht kompensiert werden, können unter Anwendung des Strahlens statische Drehmomente von bis zu 400 Nm von den Nocken betriebssicher aufgenommen werden.

Das Endschleifen der Nockenlaufbahn 5 kann gegebenenfalls mit kubischem Bornitrid erfolgen. Bei hinreichender Kühlung können durch geeignete Steuerung bzw. Einstellung der Schleifparameter wie beispielsweise Art und Zufuhr des Kühlmittels und die Schleiftiefe, in oberflächennahen Bereichen der Nockenlaufbahn 5 die Druckeigenspannungen bis auf etwa 600 N/mm² sogar noch erhöht werden, was das tribologische Verhalten der Nockenlaufbahn 5 verbessert. Dies ist insbesondere bei Nocken mit geringer Gurthöhe günstig.

## Patentansprüche

1. Verfahren zum Herstellen eines auf eine Hohlwelle unter Bildung einer Nockenwelle zu fügenden Nockens, wobei der aus einem härtbaren Stahl bestehende Nocken in einem zweistufigen Erwärmungsverfahren durch Induktionshärten mittels Mittelfrequenz (10-35 kHz) mit einer Randschichthärtetiefe in der Laufbahnmitte von minimal 0,5 mm randschichtgehärtet und anschließend abgeschreckt wird, wobei als Werkstoff für den Nocken ein Stahl ausgewählt wird, in dem der Kohlenstoff als Zementit im Perlit und Martensit gut auflösbar ist oder als feines Mischcarbid vorliegt,
**dadurch gekennzeichnet,**
**daß** nach der Vorwärmstufe des Erwärmungsverfahrens die Wärmeeinbringung für eine Dauer von 0,3-1,5 Sekunden unterbrochen wird, und daß anschließend nach der Einwirkung der Vorwärme die Nockenlaufbahn (5) mittels Mittelfrequenz derart erhitzt wird, daß sich eine Randschichthärtetiefe in der Laufbahnmitte zwischen minimal 0,5 mm und maximal 2,0 mm bezüglich des Nockengrundkreises (4) und der Nockenflanken (6) bzw. maximal 2,2 mm bezüglich der Nockenspitze (7) einstellt, wonach der Nocken (1) unmittelbar, d.h. im msec-Bereich nach Abschluß des Erwärmungsverfahrens, mit einem Abschreckmittel abgebraust wird.

2. Verfahren nach Anspruch 1,
**dadurch gekennzeichnet,**
**daß** der Nocken (1) durch Warmpressen erzeugt wird.

3. Verfahren nach Anspruch 2,
**dadurch gekennzeichnet,**
**daß** Materialüberlappungen am warmgepreßten Nocken (1) vor dem Durchhärten mechanisch entfernt werden.

4. Verfahren nach Anspruch 1,
**dadurch gekennzeichnet,**
**daß** nach dem Randschichthärten der Nocken (1) in einem Ofen bei einer Temperatur unter 190°C oder induktiv bei kurzfristig höheren Temperaturen thermisch entspannt wird.

5. Verfahren nach Anspruch 1,
**dadurch gekennzeichnet,**
**daß** der Nocken (1) vor dem Randschichthärten vergütet wird und beim sich an das Vergüten anschließenden Anlassen eine Basishärte des Nockens (1) im Bereich zwischen 25 und 40 HRC eingestellt wird.

6. Verfahren nach Anspruch 1,
**dadurch gekennzeichnet,**
**daß** der Nocken (1) direkt nach dem Warmpressen aus dem BY-Zustand heraus randschichtgehärtet wird.

## Claims

1. Method of manufacturing a cam to be joined onto a hollow shaft by forming a camshaft wherein the cam made from hardenable steel is boundary layer hardened in a two stage heating process through induction hardening by means of medium frequency (10 - 35 kHz) with a boundary layer hardness depth in the middle of the runway of a minimum of 0.5 mm and is subsequently quenched wherein the steel selected for the cam is a steel in which carbon can dissolve well as cementite in pearlite and martensite or is present as a fine combined carbide
**characterised in that**
after the pre-heating stage of the heating process the heat supply is interrupted for a duration of 0.3- 1.5 seconds and that subsequently after the influence of the pre-heat the cam runway (5) is heated by means of medium frequency in such a way that a boundary layer hardness depth forms in the centre of the runway between a minimum of 0.5 mm and a maximum of 2.0 mm in relation to the cam base circle (4) and the cam flanks (6) / a maximum of 2.2 mm in relation to the tip of the cam (7), after which the cam (1) is directly, i.e. in the msec area after completion of the heating process, showered with a quenching medium.

2. Method according to claim 1
**characterised in that**
the cam (1) is produced by heat pressing.

3. Method according to claim 2
**characterised in that**
material overlaps on the heat pressed cam (1) are mechanically removed prior to hardening through.

4. Method according to claim 1
**characterised in that**
after boundary layer hardening the cam (1) is thermally relaxed in a kiln at a temperature below 190°C or inductively with short term higher temperatures.

5. Method according to claim 1
**characterised in that**
the cam (1) is annealed prior to the boundary layer hardening and upon tempering subsequent to the annealing a base hardness of the cam (1) is formed in the area between 25 and 40 HRC.

6. Method according to claim 1
**characterised in that**
the cam (1) is boundary layer hardened directly after heat pressing out of the BY state.

## Revendications

1. Procédé pour fabriquer une came destinée à être assemblée à un arbre creux en formant un arbre à came, selon lequel on fait durcir au niveau de couches superficielles la came formée d'un acier pouvant être durci, selon un procédé de chauffage en deux étapes au moyen d'un durcissement par induction à l'aide d'une fréquence moyenne (10-35 kHz) avec une épaisseur de durcissement de couches superficielles au milieu de la piste, égale au minimum à 0,5 mm, puis on le refroidit brusquement, et selon lequel on utilise comme matériau pour la came un acier dans lequel la teneur en carbone, en tant que cémentite, peut être bien dissoute dans la perlite et la martensite ou est présente sous la forme d'un carbure mixte fin, **caractérisé en ce qu'**après l'étape de préchauffage du procédé de chauffage, l'introduction de chaleur est interrompue pendant une durée de 0,3-1,5 seconde, et ensuite, après l'action du préchauffage, on chauffe la piste (5) de la came à l'aide d'une fréquence moyenne de telle sorte que la profondeur de durcissement de couche superficielle au centre de la piste s'établisse entre au minimum 0,5 mm et au maximum 2,0 mm en référence au cercle de base (4) de la came et aux flancs (6) de la came et au maximum à 2,2 mm en référence à la pointe (7) de la came, à la suile de quoi la came (1) est arrosée avec un fluide de refroidissement brusque directement, c'est-à-dire dans l'espace de quelques ms après la fin du procédé de chauffage.

2. Procédé selon la revendication 1, **caractérisé en ce que** la came (1) est formée par pressage à chaud.

3. Procédé selon la revendication 2, **caractérisé en ce que** des chevauchements de matière au niveau de la came (1) pressée à chaud sont éliminés mécaniquement avant le durcissement à cocur.

4. Procédé selon la revendication 1, **caractérisé en ce qu'**après le durcissement des couches superficielles, on réalise une détente thermique de la came dans un four à une température inféricurc à 190°C ou inductivement à des températures supérieures pendant un bref intervalle de temps.

5. Procédé selon la revendication 1, **caractérisé en ce qu'**on ennoblit la came (1) avant le durcissement de couches superficielles, et lors du recuit qui succède à l'ennoblissement, on règle une dureté de base de la came (1) dans la gamme comprise entre 25 et 40 HRC.

6. Procédé selon la revendication 1, **caractérisé en ce qu'**on réalise un durcissement des couches superficielles de la came (1) directement après le pressage à chaud à partir de l'état BY.
